# EUROPEAN PATENT APPLICATION

(11) **EP 3 686 819 A1**
(43) Date of publication of application: **29.07.2020**
(21) Application number: 19215680.0
(22) Date of filing: 12.12.2019
(51) Int. Cl.: G06Q 10/06

(54) **COST ANALYSIS SYSTEM AND METHOD FOR DETECTING ANOMALOUS COST SIGNALS**

(30) Priority: 23.01.2019 US 201916255633
(71) Applicant: General Electric Company, Schenectady, NY 12345 (US)
(72) Inventor: URBAN, Michael, Evendale, OH 45241 (US); PAPA, Anthony, Evendale, OH 45241 (US)
(74) Representative: Openshaw & Co.

(57) **Abstract**

Provided is a method and a cost analysis system for detecting anomalous costs signals associated with components of a system. The method includes receiving real-time data stream, performing pre-processing operations including sorting data from data stream received into data subsets as user-defined, processing, via a processing module, the data subsets using a rule set, and determining whether cost change has occurred. If cost change has occurred, storing and archiving cost change data associated with the cost change in a cost database, receiving user input and generating, via a visualization tool, one or more reports showing the cost change data and automatically generating a real-time notification of cost change data, and performing post-processing operations comprising creating new data set including any post-shift data, and resetting applicable data to only consider data after a last change date, and transmitting to processing module for further processing.

## Description

### I. TECHNICAL FIELD

The present invention relates generally to cost analytics. In particular, the present invention relates to detecting anomalous cost signals.

### II. BACKGROUND

In current cost management systems, cost analytics are typically performed to show cost signals where standard data filters can be applied in order to selectively view data reports for non-random data as processed. This data typically includes cost data for high volume products such as thousands or millions per year. There are usually no explanations or narratives regarding work performed in association with the cost signals. Further, the cost data is inherently noisy and error-prone. Consistent analysis of the cost analytics is performed manually and is time-consuming and often requires substantial knowledge which can result in variability in the analysis results.

### III. SUMMARY OF THE EMBODIMENTS

Given the aforementioned deficiencies, needed is a method and cost analysis system for detecting anomalous cost signals for non-random data which is data outside of normal distribution of data. The random data can include testing, repair and full overhaul information of components of a system. The detection is completed by performing automatic detection of erroneous outlier data and visualizing systematic shifts and process changes. The system and method can thereby characterize cost behaviors, isolate data quality issues, track process changes and generate alerts due to any changes, in real-time.

According to one embodiment, a computer-implemented method is provided. The method includes receiving real-time data stream, performing pre-processing operations including sorting data from data stream received into data subsets as user-defined, processing, via a processing module, the data subsets using a rule set, and determining whether cost change has occurred. If cost change has occurred, storing and archiving cost change data associated with the cost change in a cost database, receiving user input and generating, via a visualization tool, one or more reports showing the cost change data and automatically generating a real-time notification of cost change data, and performing post-processing operations comprising creating new data set including any post-shift data, and resetting applicable data to only consider data after a last change date, and transmitting to processing module for further processing.

According to other embodiments of the present invention, a computer-implemented cost analysis system and a computer-readable storage medium encoded with instructions that cause a computer to perform the above-mentioned method are provided.

The foregoing has broadly outlined some of the aspects and features of various embodiments, which should be construed to be merely illustrative of various potential applications of the disclosure.

Other beneficial results can be obtained by applying the disclosed information in a different manner or by combining various aspects of the disclosed embodiments. Accordingly, other aspects and a more comprehensive understanding may be obtained by referring to the detailed description of the exemplary embodiments taken in conjunction with the accompanying drawings, in addition to the scope defined by the claims.

### IV. DESCRIPTION OF THE DRAWINGS

The drawings are only for purposes of illustrating preferred embodiments and are not to be construed as limiting the disclosure. Given the following enabling description of the drawings, the novel aspects of the present disclosure should become evident to a person of ordinary skill in the art. This detailed description uses numerical and letter designations to refer to features in the drawings. Like or similar designations in the drawings and description have been used to refer to like or similar parts of embodiments of the invention.
FIG. 1 is a block diagram illustrating a computer environment implementing a cost analysis system according to one or more embodiments of the present invention.
FIG. 2 is a block diagram illustrating the cost analysis system shown in FIG. 1 according to one or more embodiments of the present invention.
FIG. 3 is a flow diagram illustrating an exemplary cost analysis method of the system shown in FIG. 2 that can be implemented within one or more embodiments of the present invention.
FIG. 4 is a graph illustrating an example of chronological work orders of an equipment (e.g., engine) part of a system (e.g., an aviation system) that can be implemented within one or more embodiments of the present invention.
FIG. 5 is a screenshot illustrating an example of user input at a user interface of the visualization tool of the system shown in FIG. 2, that can be implemented within one or more embodiments of the present invention.
FIG. 6 is a screenshot illustrating another example of user input at a user interface of the visualization tool shown in FIG. 2, that can be implemented within one or more embodiments of the present invention.

### V. DETAILED DESCRIPTION OF THE EMBODIMENTS

As required, detailed embodiments are disclosed herein. It must be understood that the disclosed embodiments are merely exemplary of various and alternative forms. As used herein, the words "exemplary" and "example" are used expansively to refer to embodiments that serve as illustrations, specimens, models, or patterns. The figures are not necessarily to scale and some features may be exaggerated or minimized to show details of particular components.

In other instances, well-known components, apparatuses, materials, or methods that are known to those having ordinary skill in the art have not been described in detail in order to avoid obscuring the present disclosure. Therefore, specific structural and functional details disclosed herein are not to be interpreted as limiting, but merely as a basis for the claims and as a representative basis for teaching one skilled in the art.

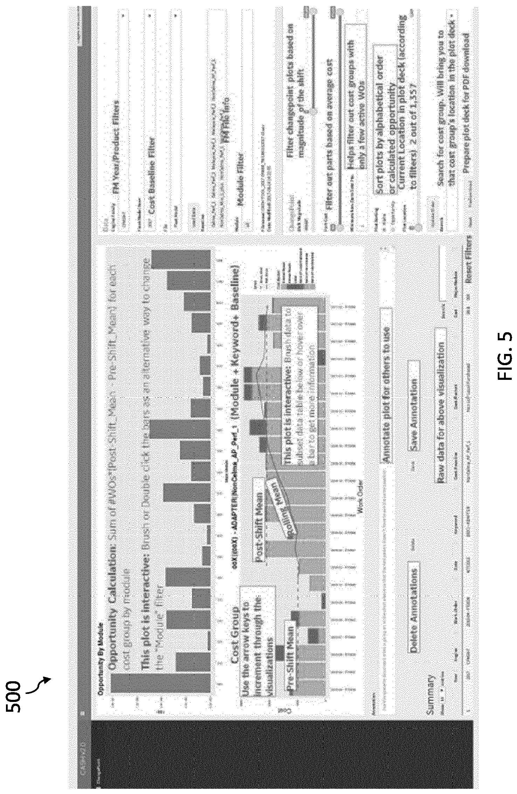

As noted above, the embodiments provide a cost analysis system and method for detecting anomalous cost signals in equipment or items of any systems, for example, engines or compressors of an aviation system. The cost analysis is performed on all levels of a hierarchical structure of an engine or a compressor. For example a highpressure compressor can be flagged individually, and cost analysis can be performed at a part level such as the compressor blades. The cost analysis system includes an user interface (via a visualization tool as depicted in FIG. 5) comprising thresholds, filters, and rule adjustment options to allow a user to access the most relevant subset of cost signals, as desired by the user. The signals are provided for cost shifts and variance shifts.

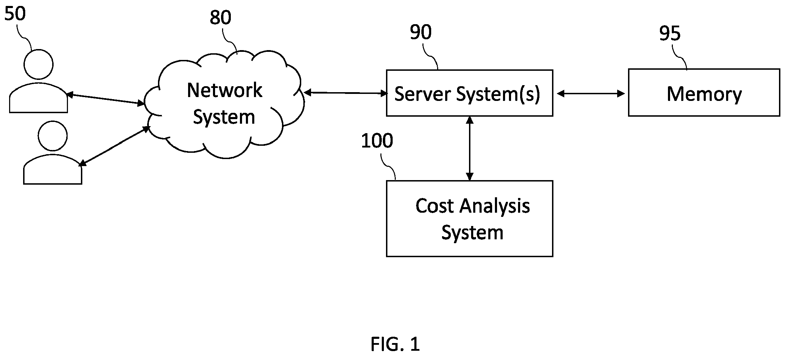

The cost analysis system and method according to embodiments of the present invention may be implemented within a general purpose computer, in an application server platform, or within an existing network system as shown in FIG. 1, for example.

As shown in FIG. 1, a network system 80 is accessible by one or more users 50, and is configured to gain access to one or more server system(s) 90. A cost analysis system 100 according to embodiments of the present invention, is configured to be implemented by the one or more server system(s) 90 via a wireless or wired network. The cost analysis system 100 can be hosted on the one or more server system(s) 90 or it can be on a stand-alone computer system.

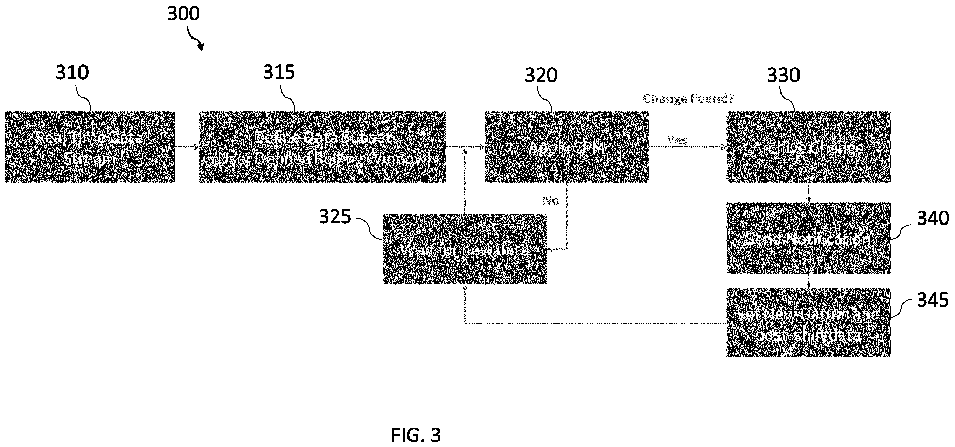

The network system 80 may be a data storage system which may implement the system 100 and method 300 (as depicted in FIG. 3) by software program instructions that are executable by a subsystem of the network system 80. The instructions cause the subsystem to perform the method 300 later described herein in FIG. 3. The method 300 can also be carried out by firmware.

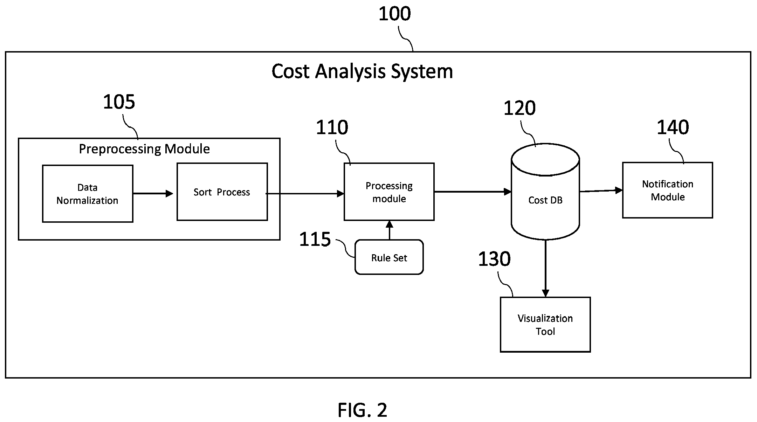

The data for the cost analysis system and method of the present invention can be stored in memory 95 (e.g., RAM, ROM, flash memory or any other type of memory) in communication with the one or more server system(s) 90. Further, the data may be stored as computer readable media for use by a computer program on the one or more server systems 90. Additional details regarding the cost analysis system 100 will be discussed below with reference to FIGs. 2 and 3.

As shown in FIG. 2, the cost analysis system 100 includes a preprocessing module 105, a processing module 110, a cost signal database 120, a visualization tool 130 and a notification tool 140.

As further shown, data to be input into the processing module 110 is random data which is first normalized and sorted via the preprocessing module 105, prior to being input into the processing module 110 for further processing. The details of which will be discussed later with reference to the method of FIG. 3.

According to an embodiment of the present invention, the processing module 110 may be a change point module, and is configured to receive a data stream, in real-time, and to detect anomalous cost signals. Upon receipt of the data, the processing module 110 accesses a rule set 115 in order to perform processes for detecting cost signal and variance signal changes. The rule set 115 can include custom rules created by the users 50 for processing user-defined data to generate cost signal reports as desired by the user, statistical methods such as change point and QSUM, and a quantity rule, for example, wherein if the quantity of a component is double what is recorded, then a flag is generated. Some rules can be a deviation from a user-defined target (e.g., more or less than 10% of a user defined target value. Further, filtering type rules including the number of non-zero data points required to trigger a shift, and a rule for only triggering an anomaly based on a sensitivity parameter in the context of a change point or a shift magnitude above a certain threshold.

The cost database 120 stores the cost signal data and variance data as processed by the processing module 110. The cost database 120 can be a RAM, ROM or any other type of memory or storage device. The cost signal data can include real-time data and archived cost change data as detected by the processing module 110.

The visualization tool 130 is a display for illustration at a user interface, to receive user-defined threshold, filter and rule adjustment information from the user(s) 50 as desired. Thus, instead of applying rules to a dataset as mentioned above, the user determines filtering within the visualization tool for visualizations as desired. The applying of rules beforehand can reduce the number of false positives detected.

The notification module 140 is a software module for generating real-time notifications in the form of cost signal and variance reports to the user(s) 50. The user 50 can then determine next steps, for example, allowing or rejecting work order requests.

Details of the operation of the cost analysis system 100 will be discussed below with reference to Figs. 2 and 3. As shown in a method 300 shown in FIG. 3, at operation 310 a real-time data stream is input into the cost analysis system 100 from within a data processing system, for example, at operation 315, the data is sorted and data subsets are defined (at the preprocessing module 105 as depicted in FIG. 2).

A pre-processing operation is performed where missing data records and points are detected and added by converting data to a sparse matrix and adding zeros (0s) in place of any absent records. Therefore, according to embodiments of the present invention provides a complete data record including repair dates and non-repair dates for equipment.

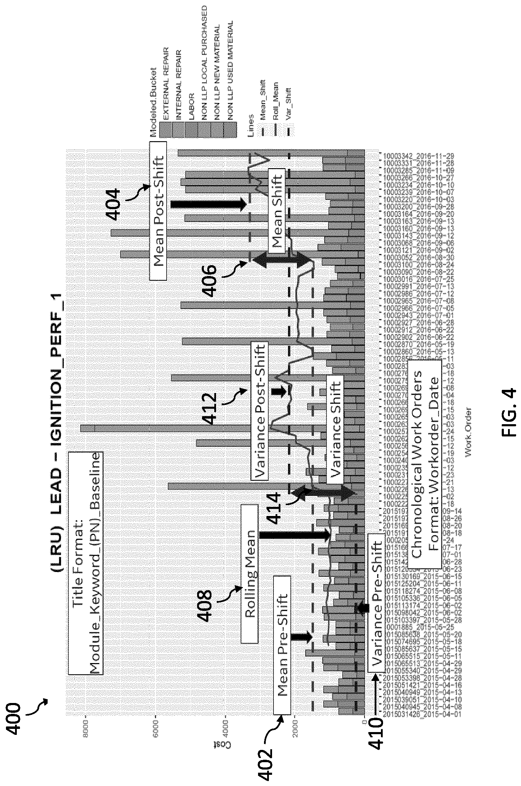

The pre-processing operation also includes data subsetting/combining into relevant levels of granularity to allow for signal visibility. This process includes, for example, dividing the data by module, part keyword and/or shop visit type, as shown in the exemplary graph 400 of FIG. 4. In FIG. 4, a major section (e.g., LRU LEAD) of the component (e.g., an engine), and the part keyword is the part name (e.g., IGNITION) and the shop visit type is a performance restoration or overhaul of the engine. According to embodiments of the present invention, the data subsets are user-defined in a rolling window wherein the window size is user-defined as the user interface, to eliminate erroneous outlier data.

Upon defining the data subsets, the data is then provided to the processing module 110 (as depicted in Fig. 2) at operation 320. The rule set 115 and other statistical methods, change point processes and user-defined rule adjustments are performed to determine whether any cost change or variance changes have occurred. The user-defined rule adjustments can include user-defined change trigger logic such as user-defined window size, number of days, number of points required before cost change is triggered.

The user 50 (as depicted in FIG. 1) can further define a tag for false positives, by applying machine learning to generate a probability of false positive for hits. If a cost change has not occurred, then the process returns to operation 325 to wait for new data. When new data is sorted at operation 315, then the sorted data is again sent to the processing module 110 for further processing (see operation 320). If a cost change has occurred, at operation 330, the cost change is stored and archived in the cost database 120 (as depicted in Fig. 2).

An example of cost change data can be seen in FIG. 4, for example. As shown in the graph 400, the chronological work orders are shown and processes are performed on the data to show cost behavior change. The detection as indicated by the dashed line 402 shows the cost mean pre-shift on the left side, and the dashed line 404 shows a cost mean post-shift. The cost mean shift is indicated by arrow 406. The graph 400 further shows a rolling mean of the costs at arrow 410. This can be the user-defined rolling window mentioned above. The graph 400 further shows a variance pre-shift at arrow 412 and a variance post-shift at arrow 414 and a variance shift at arrow 414. The change points are automatically archived and a reset of applicable data is performed to only look past the last change date. The reset window of time is set to postdate the last change date.

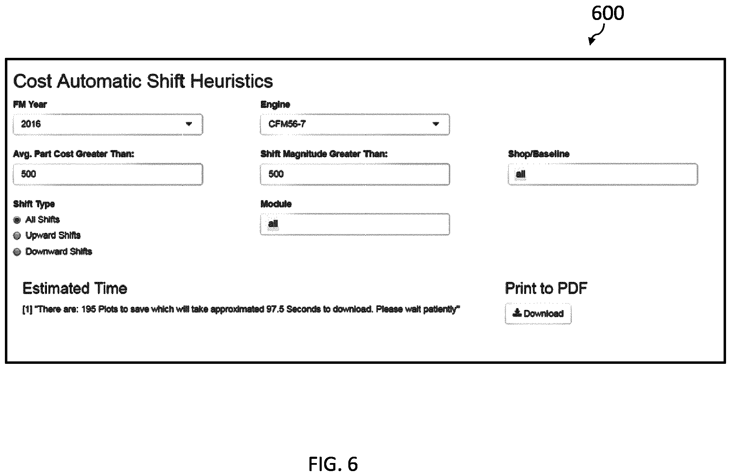

Referring back to Fig. 3, after the cost change data is archived at operation 330, the process continues to operation 340. A report (as depicted in FIG. 6) is generated to the user 50 via the visualization tool 130 in real-time and an automatic notification is sent via the notification module 140 (as also depicted in Fig. 2). At operation 345, a new data set, including any post-shift data, is sent back to the processing module 110 at operation 320 for further processing.

According to the embodiments, at operation 345 post-processing of the new data set can be performed. For example, forecasting using newly detected post-shift data as a forecast of the future, and automatic forecasting using the post-shift data instead of raw average, are performed. That is, mix of old and new data, or averaging over a past year that only includes previous data, is no longer relevant in the forecast).

The post-processing can also include opportunity calculation operations which include determining a difference between calculated shifts and prioritization based on the magnitude of the difference. Also included is automatic generation of charts for any cost-review processes to be performed by the users 50. Shift occurrence location and normalized constraint of change point location based on "N" data points, are detected.

As shown in FIG. 5, the screenshot shows a user interface 500 at the visualization tool 130, as depicted in FIG. 2 for performing opportunity calculation operations for each cost group of the module. This process utilizes an interactive plot where a user 50 (as depicted in FIG. 1) can change the filters for the desirable cost data. By way of example, these filter changes can include features such as year/product filters, cost baseline filters, module/equipment filters, etc.

The user interface 500 further depicts the work orders and pre and post-shift means and rolling means for the cost data where a user can use arrow keys to increment through the visualizations. This process allows the user to visualize systematic shifts and process changes. The user interface 500 further includes an area for annotating plots and saving of the annotations for others to use. In addition, raw data associated with the plots is assessible by the users 50.

As shown in FIG. 6, a exemplary screenshot 600 is provided for performing automatic notification via the notification tool 140 (as depicted in FIG. 2). In FIG. 6, the user can view report(s) via the visualization tool 130, including any anomalous cost signals in real-time. This facilitates instant rejection of work order request, or periodical generation of reports, such as daily or weekly reports. The report can include cost automatic shift heuristics.

The present invention provides the advantages automatic detection and visualization of systematic shifts; proactive alerting to allow real-time decisions to be made, more efficient detection of behavior changes; and data error detection, to increase accuracy in data sets for modeling cost data.

This written description uses examples to disclose the invention including the best mode, and also to enable any person skilled in the art to practice the invention, including making and using any devices or apparatuses and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the invention are provided by the subject matter of the following clauses:
1. A computer-implemented method for detecting anomalous costs signals associated with components of a system, comprising: receiving real-time data stream; performing pre-processing operations including sorting data from data stream received into a plurality of data subsets as user-defined; processing, via a processing module, the plurality data subsets using a rule set retrieved; determining whether cost change has occurred, wherein if cost change has not occurred await new data for performing pre-processing operations, and if cost change has occurred, storing and archiving cost change data associated with the cost change in a cost database; receiving user input and generating, via a visualization tool, one or more reports showing the cost change data and automatically generating a real-time notification of cost change data; and performing post-processing operations comprising creating new data set including any post-shift data, and resetting applicable data to only consider data after a last change date, and transmitting to processing module for further processing.
2. The computer-implemented method of any preceding clause, wherein the pre-processing operations further comprises: detecting missing data records and data points, and adding by converting data to a sparse matrix and adding zeros in place of any absent records; and dividing data by identifying information.
3. The computer-implemented method of any preceding clause, wherein sorting the data into the plurality of data subsets further comprises defining, by a user, a rolling window for subsetting of the data.
4. The computer-implemented method of any preceding clause, wherein upon defining the plurality of data subsets, inputting the plurality of data subsets into the processing module for processing, and wherein processing the plurality of data subsets further comprises: performing statistical methods and change point processing operations, and user-defined rule adjustments to determine whether cost change or variance change has occurred.
5. The computer-implemented method of any preceding clause, wherein the user-defined rule adjustments comprise user-defined change trigger logic including a size of the rolling window, number of days, number of points required before cost change is to be triggered.
6. The computer-implemented method of any preceding clause, further comprising: defining, by a user at the visualization tool, a tag for false positives of the data within the cost change data.
7. The computer-implemented method of any preceding clause, wherein performing post-processing operations further comprises: automatically forecasting using the post-shift data as a forecast of the future for components of the system; and performing opportunity calculation operations comprising determining a difference between calculated shifts, prioritizing based on a magnitude of the difference, and automatically generating reports for cost-review processes to be performed.
8. The computer-implemented method of any preceding clause, wherein opportunity calculation operations further comprises detecting location of shift occurrences and normalizing a constraint of change point location based on a predetermined number of data points.
9. A computer-implemented cost analysis system for detecting anomalous cost signals of components of a system, comprising: at least one processing module; a computer-readable memory containing instructions to cause the at least one processing module to perform operations comprising: receiving real-time data stream; performing pre-processing operations including sorting data from data stream received into a plurality of data subsets as user-defined; processing, via a processing module, the plurality data subsets using a rule set retrieved; determining whether cost change has occurred, wherein if cost change has not occurred await new data for performing pre-processing operations, and if cost change has occurred, storing and archiving cost change data associated with the cost change in a cost database; and performing post-processing operations comprising creating new data set including any post-shift data, and resetting applicable data to only consider data after a last change date, and transmitting to processing module for further processing; a visualization tool being an interactive tool for receiving user input and generating one or more user-defined reports showing the cost change data; and a notification tool configured to automatically generate real-time notifications of the cost change data to the user.
10. The system of any preceding clause, wherein the pre-processing operations further comprises: detecting missing data records and data points, and adding by converting data to a sparse matrix and adding zeros in place of any absent records; and dividing data by identifying information.
11. The system of any preceding clause, further comprising a user interface configured to receive user-defined rule adjustments and a rolling window for subsetting of the data to define the plurality of data subsets, from a user.
12. The system of any preceding clause, wherein upon defining the plurality of data subsets, the method further comprises inputting the plurality of data subsets into the processing module for processing, and wherein processing the plurality of data subsets further comprises: performing statistical methods and change point processing operations, and user-defined rule adjustments to determine whether cost change or variance change has occurred.
13. The system of any preceding clause, wherein the user-defined rule adjustments comprise user-defined change trigger logic including a size of the rolling window, number of days, number of points required before cost change is to be triggered.
14. The system of any preceding clause, wherein the visualization tool is further configured to be displayed at the user interface for defining the user-defined rule adjustments and a tag for false positives of the data within the cost change data.
15. The system of any preceding clause, wherein performing post-processing operations of the method further comprises: automatically forecasting using the post-shift data as a forecast of the future for components of the system; and performing opportunity calculation operations comprising determining a difference between calculated shifts, prioritizing based on a magnitude of the difference, and automatically generating reports for cost-review processes to be performed.
16. The system of any preceding clause, wherein opportunity calculation operations of the method further comprises detecting location of shift occurrences and normalizing a constraint of change point location based on a predetermined number of data points.
17. A computer-readable storage medium encoded with instructions that cause a computer to perform a method for detecting anomalous cost signals of components of a system, the method comprising: receiving real-time data stream; performing pre-processing operations including sorting data from data stream received into a plurality of data subsets as user-defined; processing, via a processing module, the plurality data subsets using a rule set retrieved; determining whether cost change has occurred, wherein if cost change has not occurred await new data for performing pre-processing operations, and if cost change has occurred, storing and archiving cost change data associated with the cost change in a cost database; receiving user input and generating, via a visualization tool, one or more reports showing the cost change data and automatically generating a real-time notification of cost change data; and performing post-processing operations comprising creating new data set including any post-shift data, and resetting applicable data to only consider data after a last change date, and transmitting to processing module for further processing.

## Claims

1. A computer-implemented method for detecting anomalous costs signals associated with components of a system, comprising:
receiving real-time data stream;
performing pre-processing operations including sorting data from data stream received into a plurality of data subsets as user-defined;
processing, via a processing module, the plurality data subsets using a rule set retrieved;
determining whether cost change has occurred, wherein if cost change has not occurred await new data for performing pre-processing operations, and if cost change has occurred, storing and archiving cost change data associated with the cost change in a cost database;
receiving user input and generating, via a visualization tool, one or more reports showing the cost change data and automatically generating a real-time notification of cost change data; and
performing post-processing operations comprising creating new data set including any post-shift data, and resetting applicable data to only consider data after a last change date, and transmitting to processing module for further processing.

2. The computer-implemented method of claim 1, wherein the pre-processing operations further comprises:
detecting missing data records and data points, and adding by converting data to a sparse matrix and adding zeros in place of any absent records; and
dividing data by identifying information.

3. The computer-implemented method of claim 1 or 2, wherein sorting the data into the plurality of data subsets further comprises defining, by a user, a rolling window for subsetting of the data.

4. The computer-implemented method of any of claims 1 to 3, wherein upon defining the plurality of data subsets, inputting the plurality of data subsets into the processing module for processing, and wherein processing the plurality of data subsets further comprises:
performing statistical methods and change point processing operations, and user-defined rule adjustments to determine whether cost change or variance change has occurred.

5. The computer-implemented method of claim 4, wherein the user-defined rule adjustments comprise user-defined change trigger logic including a size of the rolling window, number of days, number of points required before cost change is to be triggered.

6. The computer-implemented method of any of claims 1 to 5, further comprising:
defining, by a user at the visualization tool, a tag for false positives of the data within the cost change data.

7. The computer-implemented method of any of claims 1 to 6, wherein performing post-processing operations further comprises:
automatically forecasting using the post-shift data as a forecast of the future for components of the system; and
performing opportunity calculation operations comprising determining a difference between calculated shifts, prioritizing based on a magnitude of the difference, and automatically generating reports for cost-review processes to be performed.

8. The computer-implemented method of claim 7, wherein opportunity calculation operations further comprises detecting location of shift occurrences and normalizing a constraint of change point location based on a predetermined number of data points.

9. A computer-implemented cost analysis system for detecting anomalous cost signals of components of a system, comprising:
at least one processing module;
a computer-readable memory containing instructions to cause the at least one processing module to perform operations comprising:
receiving real-time data stream;
performing pre-processing operations including sorting data from data stream received into a plurality of data subsets as user-defined;
processing, via a processing module, the plurality data subsets using a rule set retrieved;
determining whether cost change has occurred, wherein if cost change has not occurred await new data for performing pre-processing operations, and if cost change has occurred, storing and archiving cost change data associated with the cost change in a cost database; and
performing post-processing operations comprising creating new data set including any post-shift data, and resetting applicable data to only consider data after a last change date, and transmitting to processing module for further processing;
a visualization tool being an interactive tool for receiving user input and generating one or more user-defined reports showing the cost change data; and
a notification tool configured to automatically generate real-time notifications of the cost change data to the user.

10. The system of claim 9, wherein the pre-processing operations further comprises:
detecting missing data records and data points, and adding by converting data to a sparse matrix and adding zeros in place of any absent records; and
dividing data by identifying information.

11. The system of claim 9 or 10, further comprising a user interface configured to receive user-defined rule adjustments and a rolling window for subsetting of the data to define the plurality of data subsets, from a user.

12. The system of any of claims 9 to 11, wherein upon defining the plurality of data subsets, the method further comprises inputting the plurality of data subsets into the processing module for processing, and wherein processing the plurality of data subsets further comprises:
performing statistical methods and change point processing operations, and user-defined rule adjustments to determine whether cost change or variance change has occurred.

13. The system of claim 11 or 12, wherein the user-defined rule adjustments comprise user-defined change trigger logic including a size of the rolling window, number of days, number of points required before cost change is to be triggered.

14. The system of any of claims 9 to 13, wherein performing post-processing operations of the method further comprises:
automatically forecasting using the post-shift data as a forecast of the future for components of the system; and
performing opportunity calculation operations comprising determining a difference between calculated shifts, prioritizing based on a magnitude of the difference, and automatically generating reports for cost-review processes to be performed.

15. A computer-readable storage medium encoded with instructions that cause a computer to perform a method for detecting anomalous cost signals of components of a system, the method comprising:
receiving real-time data stream;
performing pre-processing operations including sorting data from data stream received into a plurality of data subsets as user-defined;
processing, via a processing module, the plurality data subsets using a rule set retrieved;
determining whether cost change has occurred, wherein if cost change has not occurred await new data for performing pre-processing operations, and if cost change has occurred, storing and archiving cost change data associated with the cost change in a cost database;
receiving user input and generating, via a visualization tool, one or more reports showing the cost change data and automatically generating a real-time notification of cost change data; and
performing post-processing operations comprising creating new data set including any post-shift data, and resetting applicable data to only consider data after a last change date, and transmitting to processing module for further processing.
